(19) **Europäisches Patentamt**
**European Patent Office**
**Office européen des brevets**

(11) **EP 3 475 361 B1**

(12) **EUROPEAN PATENT SPECIFICATION**

(45) Date of publication and mention
of the grant of the patent:
**04.08.2021 Bulletin 2021/31**

(51) Int Cl.:
***C08L 23/04*** *(2006.01)*

(21) Application number: **17734675.6**

(86) International application number:
**PCT/EP2017/065247**

(22) Date of filing: **21.06.2017**

(87) International publication number:
**WO 2017/220657 (28.12.2017 Gazette 2017/52)**

(54) **PIPE PRODUCED FROM MODIFIED POLYETHYLENE**

AUS MODIFIZIERTEM POLYETHYLEN HERGESTELLTES ROHR

TUBE FABRIQUÉ À PARTIR DE POLYÉTHYLÈNE MODIFIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.06.2016 EP 16175999**

(43) Date of publication of application:
**01.05.2019 Bulletin 2019/18**

(73) Proprietor: **Borealis AG**
**1220 Vienna (AT)**

(72) Inventors:
• **RUEMER, Franz**
**4222 St. Georgen/Gusen (AT)**
• **EK, Carl-Gustav**
**426 58 Västra Frölunda (SE)**

(74) Representative: **Dehns**
**St. Bride's House**
**10 Salisbury Square**
**London EC4Y 8JD (GB)**

(56) References cited:
**EP-A2- 0 318 841     EP-A2- 0 404 552**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

The present invention is directed to a process for producing pipes from modified polyethylene recyclates, and to pipes obtained by said process.

### Background of the Invention

For the purposes of the present description and the subsequent claims, the term "recycled waste" and "recyclate" are used to indicate the material recovered from at least one of post-consumer waste and industrial waste. Post-consumer waste refers to objects having completed at least a first use cycle (or life cycle), i.e. having already served their first purpose, while industrial waste refers to the manufacturing scrap which does normally not reach a consumer. The term "virgin" denotes newly-produced materials and/or objects prior to first use and not being recycled.

Pipes constructed from polymer materials have a multitude of uses, such as fluid transport, i.e. the transport of liquids or gases, e.g. water and natural gas. During transport the fluid is often pressurised. Moreover, the transported fluid may have varying temperatures, usually within the range from about 0°C to about 50°C. Such pressurised pipes are preferably constructed from polyolefins, usually unimodal or bimodal polyethylene, e.g. medium density polyethylene (MDPE; density from 0.930 to 0.942 g/cm$^3$) and high density polyethylene (HDPE; density from 0.942 to 0.965 g/cm$^3$). The production of pipes, e.g. pipe extrusion, has a certain demand on melt viscosity and molecular weight distribution of the material. For instance, polyethylene materials typically have MFR5 levels of from 0.2 to 4 g/10min.

Nowadays, the attempt of using polymers obtained from waste materials for pipe manufacturing is of increasing interest and importance for ecological reasons and for reducing costs. Recycled polyethylene forms a significant part of the resources of available fractions of recycled polymers and polyolefin materials. However, one of the main problems with recyclate containing compounds applied in the field of pipe manufacturing is lack of available recyclate volumes on the market with sufficiently high melt viscosity and suitable molecular weight distribution for pipe production. Recycled polyethylene available in large quantities, e.g. from consumer packaging, injection moulding goods and film applications, is usually not suitable for pipe applications.

EP2770016 discloses a method for producing a recycled plastic material from a starting material comprising at least 80 wt% of high density polyethylene by adding a chemical compound in the melting state of the starting material.

WO2013101767 discloses a polyethylene composition comprising polyethylene and a small amount of peroxide having a specified density and complex viscosity, where the existence of peroxide improves the melt strength and mechanical properties.

A problem of the above-described prior art processes and compositions is that they mainly deal with moulding properties. However, the melt flow rate (MFR) reduction is limited or not in a controlled manner.

EP2966123 A1 discloses a pipe produced with a low amount of peroxide addition with low sag performance, and does not relate to the MFR change of the material.

EP-A 0404552 discloses a method for improving the processing characteristics of polyethylene blends using free radical generators such as peroxides. The resulting blends are useful for manufacture of films.

EP-A 0318841 discloses polymer compositions containing two ethylene polymers and an organic peroxide, for use in cables.

### Summary of the Invention

The object of the present invention is to provide pipes, which are produced from recycled polyethylene with a broad range of melt viscosity and MFR, and which have consistent and/or improved quality.

The finding of the present invention is that, surprisingly, pipes comprising recycled polyethylene having a broad range of starting melt flow rate (MFR), more particularly, recycled polyethylene having relatively high MFR, can be successfully produced and show properties comparable to pipes made of virgin material. Furthermore, in the extrusion step of the pipe production process, the modified polyethylene shows an MFR values as low as virgin polyethylene used for pipe production, but lower torque, which leads to lower energy consumption in the manufacturing process.

Accordingly, in a first aspect, the present invention provides a process for production of a pipe, comprising the steps of:

(a) providing a recycled polyethylene having a melt flow rate (5kg, 190°C) (MFR$_0$) in the range of 0.5 to 100 g/10 min,
(b) extruding the recycled polyethylene in the presence of a free radical generator so as to form a modified polyethylene, wherein the amount of the free radical generator is in a range of 200 ppm to 4000 ppm, based on the amount of recycled polyethylene, and wherein the modified polyethylene has a melt flow rate (5kg, 190°C) (MFR$_f$) in the range of 0.2 to 3.0 g/10min and which is less than the melt flow rate of the recycled polyethylene, and wherein the melt flow rate of the recycled polyethylene, the melt flow rate of the modified polyethylene and the amount of the free radical generator meet the exponential decay (equation (I)) in respect of the starting melt flow rate (5kg, 190°C) ($MFR_0$) and the concentration (X) of the free radical generator based on the amount of recycled polyethylene,

$$MFRf = MFR0 \times e^{-\mu X} \quad (I)$$

wherein the exponential decay constant $\mu$ in the exponential decay (equation (I)) is greater than zero, and
(c) forming said modified polyethylene into a pipe or layer of a pipe consisting of said modified polyethylene and optionally a filler and/or other additive(s).

In another aspect, the invention provides pipes obtained by the above process.

**Detailed Description of the Invention**

Polyethylene

The polyethylene base resin comprised in the pipes produced by the process of the present invention is made from recycled thermoplastic polyethylene, which can be obtained from post-consumer waste, industrial waste or a mixture thereof. More specifically, the recycled polyethylene can be selected from recycled high density polyethylene (rHDPE), recycled medium density polyethylene (rMDPE), recycled low density polyethylene (rLDPE), recycled linear low density polyethylene (rLLDPE), and the mixtures thereof. Preferably, the recycled polyethylene comprises more than 80%, preferably more than 90%, more preferably more than 95% of polyethylene. The polyethylene fraction in the recycled polyethylene has a density suitably not lower than 0.900 g/cm$^3$, preferably not lower than 0.910 g/cm$^3$, more preferably not lower than 0.925 g/cm$^3$, even more preferably not lower than 0.945 g/cm$^3$, most preferably not lower than 0.950 g/cm$^3$.
The polyethylene used as raw material in the present invention may be any homopolymer of ethylene or copolymer of ethylene with one or more alpha-olefins having from 3 to 10 carbon atoms and mixtures thereof.
The melt flow rate (5kg, 190°C) (MFR0) of the recycled polyethylene used as a raw material in the process of the present invention is from 0.5 to 100 g/10 min, preferably from 1.0 to 75 g/10 min, more preferably from 1.5 to 50 g/10min.
As mentioned above, the polyethylene may be a homo- or copolymer. If the polyethylene is a copolymer, it may contain from 0.1 to 30 % by mole of comonomer(s), preferably from 0.1 to 20 % by mole of comonomer(s), more preferably from 0.1 to 15 % by mole of comonomer(s), and even more preferably from 0.1 to 10% by mole of comonomer(s), e.g. from 0.1 to 5% by mole of comonomer(s), the comonomer(s) preferably being one or more alpha-olefins having from 3 to 10 carbon atoms. For example, the ethylene copolymer may contain from 90 to 99.9 % by mole, preferably from 92 to 99.5 % by mole, of units derived from ethylene and from 0.1 to 10 % by mole, preferably from 0.5 to 8 % by mole, of units derived from the comonomer(s), the comonomer(s) preferably being one or more alpha-olefins having from 3 to 10 carbon atoms.
The polyethylene as raw material used in the present invention may be in any form including particles, pellets, flakes, grinded products, or shredded film, etc.

Free Radical Generator

The pipe of the present invention comprises a modified polyethylene which is produced by extruding the recycled polyethylene in the presence of a free radical generator, which decomposes during the extrusion thereby producing the modified polyethylene.
Preferably the free radical generator is an organic peroxide, which may be selected from acyl peroxides, alkyl peroxides, hydroperoxides, peresters, peroxycarbonates and mixtures thereof.
Examples of suitable organic peroxides include di-tert-amylperoxide, 2,5-di(tert-butyl-peroxy)-2,5-dimethyl-3-hexyne, 2,5- di(tert-butylperoxy)-2,5-dimethylhexane, tert-butylcumylperoxide, di(tert-butyl)peroxide, dicumylperoxide, butyl-4,4-bis(tert-butylperoxy)-valerate, 1,1-bis(tert-butylperoxy)-3,3,5-trimethylcyclohexane, tert-butylperoxybenzoate, dibenzoylperoxide, bis(tertbutylperoxyisopropyl)benzene, 2,5-dimethyl-2,5-di(benzoylperoxy)hexane, 1,1-di(tertbutylperoxy) cyclohexane, 1,1-di(tert amylperoxy)-cyclohexane, and any mixtures thereof; for example, the peroxide may be selected from 2,5-di(tert-butylperoxy)-2,5-dimethylhexane, di(tert-butylperoxyisopropyl)benzene, dicumylperoxide, tertbutylcumylperoxide, di(tert-butyl)peroxide, or mixtures thereof, for example, the peroxide is dicumylperoxide.
Preferably, the peroxide is selected from 2,5-dimethyl-2,5-di(tert-butylperoxy)hexane, 2,5-dimethyl-2,5-di(tert-butylperoxy)hexyne-3, 3,3,5,7,7-Pentamethyl-1,2,4-trioxepane, 3,6,9-triethyl-3,6,9-trimethyl-1,4,7-triperoxonane, and di-tert-butyl peroxide.

The person skilled in the art knows how to choose the appropriate peroxide that will thermally decompose during the reactive modification process according to the present invention. Preferably, the half-life of the peroxide is 0.1 hour at a temperature of at least 94°C, preferably at least 100°C, more preferably at least 110 °C. For example, the half-life of the peroxide is 0.1 hour at a temperature range of from 94 to 220 °C, preferably in the range of from 100 to 190 °C, like in the range of from 110 to 175°C.

In the modification process according to the present invention for the production of a modified polyethylene, the polyethylene is mixed with peroxide in the amount of from 200 ppm to 4000 ppm, preferably from 400 ppm to 3500 ppm, more preferably from 450 ppm to 3000 ppm, based on the weight of the polyethylene

The peroxide may be used in the form of masterbatch wherein the peroxide is fed as a pre-mix (masterbatch), preferably fed directly into the extruder. Preferably, the peroxide is pre-mixed with a carrier which can be a polymer, like polyethylene and polypropylene, or other materials, e.g. silica and $CaCO_3$, forming a masterbatch and then fed into the extruder.

Modified Polyethylene

The modified polyethylene is characterised by the correlation between the melt flow rate of the modified polyethylene (5kg, 190°C) ($MFR_f$), the melt flow rate of the recycled polyethylene (5kg, 190°C) ($MFR_0$) and the concentration (X) of the peroxide, based on the amount of polyethylene.

The melt flow rate of the modified polyethylene (5kg, 190°C) ($MFR_f$) of the modified polyethylene, the melt flow rate of the recycled polyethylene (5kg, 190°C) ($MFR_0$) and the concentration (X) of the peroxide based on the amount of polyethylene meet the equation (I),

$$MFRf = MFR0 \times e^{-\mu X} \quad (I)$$

It is preferred that the exponential decay constant $\mu$ is in the range of from 0.0005 to 0.005, preferably in the range of from 0.001 to 0.005.

Preferably, the modified polyethylene obtained in the present invention has a gel content characterized by a xylene hot insoluble content (XHU) of below 2.0%, preferably of below 1.6%, more preferably of below 1.2%, even more preferably below 1.0% and most preferably below 0.7%.

In a further preferred embodiment of the process in present invention, a proper melt viscosity ratio (eta 0.05/eta 300), which is defined as melt viscosity at 190°C and 0.05 rad/s frequency divided by the melt viscosity at a frequency of 300 rad/s, is also required. Preferably, the (eta 0.05/eta 300)$_f$ ratio of the modified polyethylene is greater than the (eta 0.05/eta 300)$_0$ ratio of the recycled polyethylene, more preferably the (eta 0.05/eta 300)$_f$ ratio is at least 35% larger than the (eta 0.05/eta 300)$_0$ ratio, even more preferably the (eta 0.05/eta 300)$_f$ ratio is at least 50% larger than the (eta 0.05/eta 300)$_0$ ratio and most preferably the (eta 0.05/eta 300)$_f$ ratio is at least 100% larger than the (eta 0.05/eta 300)$_0$ ratio. In an especially preferred embodiment, the (eta 0.05/eta 300)$_f$ ratio is at least 500% larger than the (eta 0.05/eta 300)$_0$ ratio, for example, the (eta 0.05/eta 300)$_f$ ratio is at least 800% larger than the (eta 0.05/eta 300)$_0$ ratio.

In a further preferred embodiment of the present invention, the ratio of melt flow rate (FRR 21/5, 190°C) which is defined as MFR21/MFR5 is of importance for the melt processing behaviour of the modified polymer. Preferably, the FRR21/5$_f$ of the modified polyethylene is greater than the FRR21/5o of the recycled polyethylene, more preferably, the FRR21/5$_f$ is at least 35% larger than the FRR21/5$_0$, even more preferably the FRR21/5$_f$ is at least 50% larger than the FRR21/50and most preferably the FRR21/5fis at least 100% larger than the FRR21/5o. In an especially preferable embodiment, the FRR21/5$_f$ is at least 150% larger than the FRR21/5o, more preferably the FRR21/5f is at least 200% larger than the FRR21/5o, for example, the FRR21/5$_f$ is at least 300% larger than the FRR21/5o.

Filler

In another preferred embodiment, the pipe according to the present invention further comprises a filler to increase the stiffness of the material, lower the cost and increase the speed of the manufacturing process. The filler can be an inorganic filler or organic filler.

Preferably, the filler is present in an amount of at least 1 wt. %, more preferably at least 5 wt.%, still more preferably at least 8 wt. %, still more preferably at least 10 wt.% and most preferably at least 12 wt.%. Furthermore, the filler is present in an amount of at most 50 wt.%, more preferably at most 45 wt.%, still more preferably at most 40 wt.%. Inorganic mineral filler is suitably present in the pipe according to the present invention in an amount of from 1 to 50 wt%, preferably from 5 to 45 wt%, more preferably from 8 to 42 wt%, most preferably from 10 to 40 wt%. %. For flame retardant fillers, e.g. magnesium dihydroxide (MDH) and aluminium trihydroxide (ATH), even higher filler levels are generally used, e.g. in the range of from 1 to 70 wt%, preferably from 5 to 64 wt%, more preferably from 8 to 62 wt%, most preferably from 10 to 60 wt%.

The filler according to the invention may comprise any inorganic filler materials known in the art. The filler may also comprise a mixture of any such filler materials. Examples of suitable filler materials include oxides, hydroxides and carbonates of aluminium, magnesium, calcium and/or barium. Usually, the filler comprises an inorganic compound of a metal of groups 1 to 13, preferably groups 1 to 3, more preferably groups 1 and 2 and most preferably group 2 of the Periodic Table of Elements. The numbering of chemical groups, as used herein, is in accordance with the IUPAC system in which the groups of the periodic system of the elements are numbered from 1 to 18. Preferably, the inorganic filler comprises a compound selected from carbonates, oxides, hydroxides and sulphates. Examples of preferred inorganic fillers include calcium carbonate, talc, magnesium oxide, huntite$Mg_3Ca(CO_3)_4$, hydrated magnesium silicate, kaolin ("China clay"), magnesium dihydroxide (MDH) and aluminium trihydroxide (ATH), preferably calcium carbonate, magnesium oxide, hydrated magnesium silicate, kaolin ("China clay"), magnesium dihydroxide (MDH) and aluminium trihydroxide (ATH).

Examples of further suitable fillers used as flame retardants include organohalogen compounds and organophosphorus compounds. Examples of suitable organohalogen compounds include organochlorines, such as chlorendic acid derivatives and chlorinated paraffins; organobromines such as decabromodiphenyl (decaBDE), decabromodiphenyl ethane (a replacement for decaBDE), polymeric brominated compounds such as brominated polystyrenes, brominated carbonate oligomers (BCOs), brominated epoxy oligomers (BEOs), tetrabromophthalic anyhydride, tetrabromobisphenol A (TBBPA) and hexabromocyclododecane (HBCD). Many halogenated flame retardants are usually used in conjunction with a synergist to enhance their efficiency. Antimony trioxide is widely used but other forms of antimony such as the pentoxide and sodium antimonate can also be used.

Examples of suitable organophosphorus compounds include organophosphates such as triphenyl phosphate (TPP), resorcinol bis(diphenylphosphate) (RDP), bisphenol A diphenyl phosphate (BADP), and tricresyl phosphate (TCP); phosphonates such as dimethyl methylphosphonate (DMMP); and phosphinates such as aluminium diethyl phosphinate. In one important class of flame retardants, compounds contain both phosphorus and a halogen, e.g. tris(2,3-dibromopropyl) phosphate (brominated tris) and chlorinated organophosphates such as tris(1,3-dichloro-2-propyl)phosphate (chlorinated tris or TDCPP) and tetrakis(2-chlorethyl)dichloroisopentyldiphosphate (V6).

Preferably, the inorganic filler has a weight average mean particle size, D50, of 25 micron or below, more preferably of 15 micron or below. Preferably, only 2 wt% of the filler has a particle size of 40 microns or larger, more preferably 30 micron or larger.

In a preferred embodiment in which $CaCO_3$ is used as filler, the particles preferably have a weight average median particle size D50 of 6 microns or below, more preferably 4 microns or below. The weight percentage of the filler in the total composition is preferably in the range of from 20 to 50%. In this embodiment, preferably only 2 wt% has a particle size of 30 micron or larger, more preferably 25 micron or larger and even more preferably 20 micron or larger.

Generally, the purity of the filler is 94% or higher, preferably 95% or higher and more preferably 97% or higher.

The inorganic filler may comprise filler which has been surface-treated with an organosilane, polymer, carboxylic acid or salt, etc. to aid processing and provide better dispersion of the filler in the organic polymer. Such coatings usually do not make up more than 3 wt% of the filler.

An organic filler can also be used according to the present invention. Examples of suitable organic fillers include natural polymers, cellulose fibers, wood flour and fibers, flax, cotton, sisal, starch, rice husk and carbon, graphite carbon fibers, graphite fibers and flakes, carbon nanotubes, carbon black, and synthetic polymers, e.g. polyamide, polyester, aramid, and polyvinyl alcohol fibers.

Process for Producing the Pipe

The process to produce the modified polyethylene according to the invention includes an extrusion step. The extrusion is suitably carried out in melt mixing equipment known to a person skilled in the art. Preferably, an extruder or kneader is used. The extruder may be any extruder known in the art. The extruder may be a single screw extruder; a twin screw extruder, such as a co-rotating twin screw extruder or a counter-rotating twin screw extruder; or a multi-screw extruder, such as a ring extruder. Furthermore, the extruder may be an internal mixer such as a Banbury type mixer or a counter- rotating continuous intensive mixer (CIM) or a special single screw mixer such as the Buss co-kneader or a TriVolution kneader. A static mixer such as Kenics, Koch etc. can also be used in addition to the extruder units mentioned in order to improve the distributive mixing with comparatively low heat generation. An especially preferred extruder is a co-rotating twin screw extruder or a continuous intensive mixer (CIM). The extruder is preferably a single screw extruder in which the polymer is extruded through an annular die and to be directly formed into a pipe. Examples of suitable extruders according to the present invention include those supplied by Coperion Werner & Pfleiderer, Berstorff, Japan Steel works, Kobe Steel or Farrel.

The size or nominal throughput in kg/hour of the extruder is a normally related to the diameter of the unit. The nominal throughput for a suitable unit could range from 50 kg/hour to 60 000 kg/hour or more and with screw or rotor diameters from 30 mm to 460 mm or more.

The extruder typically comprises a feed zone, a melting zone, a mixing zone and a die zone. Further, the melt pressed through the die is typically solidified and cut to pellets in a pelletiser.

The extruder typically has a length over diameter ratio, L/D, of from about 4:1 to about 65:1, preferably from about 5:1 to about 60:1. More preferably the L/D is from about 6:1 to about to 50:1 and even more preferably from about 7:1 to about 45:1. As it is well known in the art the co-rotating twin screw extruders usually have a greater L/D than counter-rotating twin screw intensive mixers (CIM).

Preferred length over diameter ratio, L/D, for co-rotating or counter-rotating extruders is from about 15:1 to about 65:1, preferably from about 20:1 to about 60:1. More preferably the L/D is from about 22:1 to about to 50:1 and even more preferably from about 25:1 to about 45:1.

Preferred length over diameter ratio, L/D, for counter-rotating intensive mixers (CIM) are from about 4:1 to about 15:1, preferably from about 4.5:1 to about 12:1. More preferably the L/D is from about 5:1 to about to 11:1 and even more preferably from about 6:1 to about 10:1.

The extruder may have one or more evacuation, or vent, ports for removing gaseous components from the extruder. Such gaseous components may include unreacted free radical generator or decomposition products thereof. For polymer recyclates, particularly when supplied in different forms such as flakes or shredded film, the infeed material may contain certain amount of entrapped moisture which preferably would need an evacuation or vacuum port to enable sufficient degassing of the material, e.g. in order to minimise void formation in the pellets. Such evacuation port should be placed in a sufficient downstream location for allowing sufficient reaction time for the peroxide with polyethylene. Suitably the evacuation port can be located within the downstream end of the melting zone or within the mixing zone.

A stripping agent, such as water, steam or nitrogen, is suitably added to the extruder to assist in removing the volatile components, such as unreacted functionally unsaturated compound, from the polyethylene melt. Such stripping agent, when used, is added upstream of the evacuation port or upstream of the most downstream evacuation port, if there are multiple evacuation ports. The evacuation and stripping technology could also be used to reduce the amount of odour in the pellets and in the final product.

The extruder may also have one or more feed ports for feeding further components, such as polymer, additives and the like, into the extruder. The location of such additional feed ports depends on the type of material added through the port.

Optionally, additives can be added to the composition during the compounding step in an amount as described above. Preferably, the composition of the invention obtained from the reactor is compounded in the extruder together with additives in a manner known in the art.

In one embodiment, the extrusion step is carried out using feed rates of 100 kg/h to 70 000 kg/h, more preferably 300 kg/h to 55 000 kg/h. The throughput is typically from 500 kg/h to 50 000 kg/h in commercial production. Another preferred size of a unit with its main use with recycled polymers is between 700 kg/h to 5 000 kg/h in feed rate.

The screw speed of the extruder is preferably 140 rpm to 450 rpm, more preferably 170 rpm to 400 rpm and even more preferably 190 rpm to 380 rpm.

Preferably, in said extrusion step the SEI (specific energy input) of the extruder may be from 0.15 to 0.4 kWh/kg, preferably 0.15 to 0.35 kWh/kg, more preferably from 0.15 to 0.25 kWh/kg, whereby the SEI is directly calculated from the electric input of the extruder ignoring the intrinsically limited effectiveness, e.g. energy losses from the electrical motor and transmission.

Feed Zone

The polyethylene is preferably introduced into the extruder through a feed zone. The feed zone directs the particulate polyethylene into the melting zone. Typically the feed zone is formed of a feed hopper and a connection pipe connecting the hopper into the melting zone. Usually the polyethylene flows through the feed zone under the action of gravity, i.e., generally downwards. The residence time of the polyethylene (and other components) in the feed zone is typically short, normally not more than 30 seconds, more often not more than 20 seconds, such as not more than 10 seconds. Typically the residence time is at least 0.1 seconds, such as one second.

The stream of the free radical generator can be introduced into the feed zone of the extruder, alternatively further downstream, e.g. late in the melting zone or early in the mixing zone. It may be introduced into the feed zone as a separate stream or as a premix with the polyethylene or as a masterbatch.

Melting Zone

The polyethylene preferably passes from the feed zone to a melting zone. In the melting zone the particulate polyethylene melts. The solid polyethylene particles are conveyed by drag caused by the rotating screw. The temperature then increases along the length of the screw through dissipation of frictional heat and increases to a level above the melting temperature of the polyethylene. Thereby the solid particles start to melt.

It is preferred that the screw in the melting zone, for a conventional single screw extruder, is designed so that the screw in the melting zone is completely filled. Thereby the solid particles form a compact bed in the melting zone. This happens when there is sufficient pressure generation in the screw channel and the screw channel is fully filled. There are different melting principles in different extruders and mixing devises, however, the friction between the polyethylene and the extruder screw and walls as well as between the polyethylene particles plays a major role in the melting zone to enable efficient melting of the polyethylene. For a co-rotating twin screw extruder, typically the screw in the melting zone comprises conveying elements without substantial backwards flow. However, in order to achieve compact bed some barrier or back-mixing elements may need to be installed at a suitable location, for instance, close to the downstream end of the melting zone. The screw design for obtaining a compact particle bed is well known in the extruder industry. The problem is discussed, among others, in paragraphs 7.2.2 and 8.6.2 of Chris Rauwendaal: "Polymer Extrusion", Carl Hanser Verlag, Munich 1986.

Due to frictional heat the temperature increases along the length of the screw and the polyethylene starts to melt. The melting behaviour is discussed, for instance, in the above-mentioned book of Chris Rauwendaal, in the paragraph 7.3, especially in 7.3.1.1 , and 7.3.2.

Mixing Zone

After the melting zone the polyethylene preferably passes to a mixing zone. The screw in the mixing zone typically comprises one or more mixing sections which comprise screw elements providing a certain degree of backward flow. In the mixing zone the polyethylene melt is mixed for achieving a homogeneous mixture. The mixing zone may also comprise additional components at the downstream end, such as a throttle valve or a gear pump. The extruder manufacturers usually can provide designs of mixing zones suitable for different types of polymers (like polypropylene, polyethylene and so on). Such designs are generally applicable in the process of the present invention.

The peroxide could be fed into the extruder either in the feed hopper, preferably as a premix or masterbatch, alternatively the peroxide could be introduced into the extruder, suitably into the upstream part of the mixing zone downstream of the melting zone, and in that case as a dry mix or masterbatch via a second feedport or via a side feeder. The peroxide could also be fed in liquid form via a liquid injection system into the mixing zone of the extruder, preferably into the upstream part of the mixing zone.

The temperature in the mixing zone is greater than the melting temperature of the polyethylene. Further, the temperature needs to be greater than the decomposition temperature of the peroxide. The temperature needs to be less than the decomposition temperature of the polyethylene. Suitably, the temperature is from about 5°C greater than the melting temperature of the polyethylene, preferably from about 10°C greater than the melting temperature of the polyethylene to preferably about 280°C, more preferably about 250°C and especially preferably to about 240°C. For instance, for the temperature should be preferably in the range of from 165°C to 280°C, more preferably in the range of from 170°C to 250°C, like in the range of from 180°C to 240°C, and even more preferably between 180°C to 230°C .

The overall average residence time in the combined melting zone and the mixing zone of the extruder should be preferably at least about 15 seconds and more preferably at least about 20 seconds. Typically the average residence time does not exceed 60 seconds and preferably it does not exceed 55 seconds. Good results have been obtained when the average residence time was within the range of from 22 to 45 seconds. As it was discussed above, it is preferred to remove gaseous material from the extruder via one or more evacuation ports or, as they are sometimes called, vent ports. Venting of gaseous material from the extruder is well known in the industry and is discussed, for instance, in the above-mentioned book of Chris Rauwendaal, in paragraphs 8.5.2 and 8.5.3.

It is possible to use more than one evacuation port. For instance, there may be two ports, an upstream port for crude degassing and a downstream port for removing the remaining volatile material. Such an arrangement is advantageous if there is large amount of gaseous material in the extruder.

The vent ports are suitably located in the mixing zone. However, they may also be located at the downstream end of the melting zone. Especially if there are multiple vent ports it is sometimes advantageous to have the most upstream port within the melting zone and the subsequent port(s) in the mixing zone.

Preferably the vent ports are connected to a reduced pressure, such as from atmospheric pressure to a pressure of 0.5 bar (50 kPa) less than atmospheric pressure, more preferably from a pressure of 0.05 bar (5 kPa) less than atmospheric pressure to a pressure of 0.4 bar (40 kPa) less than atmospheric pressure,

It is also possible to add a stripping agent, such as water, steam, $CO_2$ or $N_2$, into the extruder. Such stripping agent, when used, is introduced upstream of the vent port or, when there are multiple vent ports, upstream of the most downstream vent port and downstream of the upstream vent port. Typically the stripping agent is introduced into the mixing zone or at the downstream end of the melting zone. Stripping is discussed, among others, in paragraph 8.5.2.4 of the book of Chris Rauwendaal.

Die Zone

The die zone typically comprises a die plate, which is sometimes also called breaker plate and which is a thick metal disk having multiple holes. The holes are parallel to the screw axis. The molten olefin polymer is pressed through the die plate. The molten polyethylene thus forms a multitude of strands. The strands are then passed to the pelletiser.

The function of the die plate is to arrest the spiralling motion of the polyethylene melt and force it to flow in one direction.

The die zone may also comprise one or more screens which are typically supported by a breaker plate or directly by the die plate. For recycled materials, which normally are containing a number of contaminants and foreign particles, it is often required to have a specially designed melt filter unit with a continuous cleaning devise or cleaning cycle, in between the extruder with the melt pressurising step and the die plate. The screens are used for removing foreign material from the polyethylene melt and also for removing gels from the polyethylene. The gels are typically foreign rubber particles or undispersed high molecular weight polymer, for instance, cross-linked polymer.

In a preferred embodiment of the present invention, in the extrusion step of the process for producing the pipe, the melt pressure of the modified polyethylene is at least 70 bars (7 MPa), preferably at least 75 bars (7.5 MPa), more preferably at least 80 bars (8 MPa).

It will be appreciated that prior to forming the modified polyethylene of the invention into pipes, polymer components may be blended with standard additives and adjuvants known in the art. They may also contain additional polymers, such as carrier polymers of the additive masterbatches. The properties of the components of the composition and the composition itself can be measured in the absence of or in the presence of any additives. It will be preferred that additives are present however when properties are determined.

Suitable antioxidants and stabilizers are, for instance, sterically hindered phenols, phosphates or phosphonites, sulphur containing antioxidants, alkyl radical scavengers, aromatic amines, hindered amine stabilizers and the compositions according to the present invention may contain compounds from two or more of the above-mentioned groups.

Examples of sterically hindered phenols are, among others, 2,6-di-tert-butyl-4-methyl phenol (sold, e.g., by Degussa under a trade name of Ionol CP), pentaerythrityl-tetrakis(3-(3',5'-di-tert. butyl-4-hydroxyphenyl)-propionate (sold, e.g., by Ciba Specialty Chemicals under the trade name of Irganox 1010), octadecyl-3-3(3'5'-di-tert-butyl-4'-hydroxy-phenyl)propionate (sold, e.g., by Ciba Specialty Chemicals under the trade name of Irganox 1076) and 2,5,7,8-tetramethyl-2(4',8',12'-trimethyltridecyl)chroman-6-ol (sold, e.g., by BASF under the trade name of Alpha-Tocopherol).

Examples of phosphates and phosphonites are tris (2,4-di-t-butylphenyl) phosphite (sold, e.g., by BASF under the trade name of Irgafos 168).

Commercially available blends of antioxidants and process stabilizers are also available, such as Irganox B225, Irganox B215 and Irganox B561 marketed by Ciba Specialty Chemicals.

Suitable acid scavengers are, for instance, metal stearates, such as calcium stearate and zinc stearate. They are used in amounts generally known in the art, typically from 500 ppm to 10000 ppm and preferably from 500 to 5000 ppm.

Carbon black is a generally used pigment, which also acts as an UV-screener. Typically carbon black is used in an amount of from 0.5 to 5 % by weight, preferably from 1.5 to 3.0 % by weight. Preferably the carbon black is added as a masterbatch (CBMB) containing 39.5 wt.% carbon black (Elftex TP, distributed by Cabot), 0.1 wt.% Irganox 1010 (from Ciba, now part of BASF) and 60.4 wt.% ethylene-butylene copolymer having a comonomer content of 1.7 wt.%, an MFR2 (2.16 kg, 190°C, ISO 1133) of 30 g/10 min and a density of 959 kg/m$^3$ in an amount of 5.75 wt.%. Then the mixture may be extruded to pellets in a counter-rotating twin screw extruder. Typically, compounding conditions as given in European patent application No. 13004878.8, Table 1 may be used. Also titanium oxide may be used as an UV-screener. It is particularly preferred that carbon black is present in the compositions of the invention, preferably in an amount of about 2.25 % by weight.

The modified polyethylene of the invention is then formed into pipes. In the present invention the term "pipe" covers pipes as well as all supplementary parts for pipes such as fittings, valves, chambers and all other parts which are commonly necessary for a piping system. Pipes can be manufactured using various techniques such as RAM extrusion or screw extrusion. The actual pipe extrusion process is not meant by the above-described extrusion step for extruding the multimodal ethylene polymer composition of the invention.

Pipes according to the present invention are produced according to the methods known in the art from the polyethylene composition as described above. Thus, according to one preferred method the polyethylene composition is extruded through an annular die to a desired internal diameter, after which the polymer composition is cooled.

In a specific embodiment of the present invention, the modification of recycled polyethylene will be partly or completely take place in the pipe extrusion step, and can be fully achieved in this step. In another specific embodiment of the present invention, the modification of the recycled polyethylene will take place by blending the free radical generator and other ingredients below the decomposition temperature of the free radical generator, or just slightly above the decomposition temperature of the free radical generator in order to initiate but not finalise the modification, in a mixer or compounding unit prior to the pipe extrusion step followed by the modification step in the pipe extruder at temperatures above the decomposition temperature, including sufficient time to enable the free radical generator to sufficiently decompose and the polyethylene to be fully modified.

The pipe extruder preferably operates at a relatively low temperature and therefore excessive heat build-up should be avoided. Extruders having a high length to diameter ratio L/D more than 15, preferably of at least 20 and in particular of at least 25 are preferred. The modern extruders typically have an L/D ratio of from about 30 to 35.

The polymer melt is extruded through an annular die, which may be arranged either as end-fed or side-fed configuration. The side-fed dies are often mounted with their axis parallel to that of the extruder, requiring a right-angle turn in the connection to the extruder. The advantage of side-fed dies is that the mandrel can be extended through the die and this allows, for instance, easy access for cooling water piping to the mandrel.

After the plastic melt leaves the die it is calibrated to the correct diameter. In one method the extrudate is directed into a metal tube (calibration sleeve). The inside of the extrudate is pressurised so that the plastic is pressed against the wall of the tube.

According to still another method the extrudate leaving the die is directed into a tube having perforated section in the centre. A slight vacuum is drawn through the perforation to hold the pipe against the walls of the sizing chamber.

After the sizing the pipe is cooled, typically in a water bath having a length of about 5 metres or more.

In a specific embodiment of the present invention, the modified polyethylene of the invention can also be produced as one or more layers of a multilayer pipe.

### Examples

The following definitions of terms and determination methods apply for the above general description of the invention as well as to the below examples unless otherwise defined.

### Measuring Methods

The following definitions of terms and determination methods apply for the above general description of the invention as well as to the below examples unless otherwise defined.

### Density

Density of the polymer was measured according to ISO 1183-1:2004 (method A) on compression moulded specimen prepared according to EN ISO 1872-2 (Feb 2007) and is given in $kg/m^3$.

### Melt Flow Rate

The melt flow rate (MFR) is determined according to ISO 1133 and is indicated in g/10 min. The MFR is an indication of the flowability, and hence the processability, of the polymer / polyethylene for specific conditions. The higher the melt flow rate, the lower the viscosity of the polymer. The MFR is determined at 190 °C for polyethylene and at a loading of 2.16 kg (MFR2), 5.00 kg (MFR5) or 21.6 kg (MFR21).

The quantity FRR (flow rate ratio) is an indication of molecular weight distribution, particularly important to reflect key parts for the melt processing behaviour of the polymer / polyethylene, e.g. for indication of the melt shear thinning properties and denotes the ratio of flow rates at different loadings. Thus, FRR21/5 denotes the value of MFR21/MFR5.

### XHU

About 2 g of the polymer / polyethylene (mp) are weighed and put in a mesh of metal and the combined weight of the polymer / polyethylene and the mesh is determined (mp+m). The polymer / polyethylene in the mesh is extracted in a soxhlet apparatus with boiling xylene for 5 hours. The eluent is then replaced by fresh xylene and the boiling is continued for another hour. Subsequently, the mesh is dried and weighed again for obtaining the combined mass of hot xylene insoluble polymer / polyethylene (XHU) and the mesh (mXHU+m). The mass of the xylene hot insoluble polymer / polyethylene (mXHU) obtained by the formula (mXHU+m) - m = mXHU is put in relation to the weight of the polymer / polyethylene (mp) to obtain the fraction of xylene insoluble polymer / polyethylene mXHU/mp. This fraction of xylene insoluble polymer / polyethylene is then taken as the gel content.

### Pipe Testing

The pressure test on un-notched 32 mm SDR 11 pipes having a length of 450 mm and un-notched 110mm diameter and 5mm wall thickness with a length of 650mm were carried out in water-inside and water-outside environment according to ISO 1167-1:2006. End caps of type A were used. The time to failure is determined in hours.

Falling Weight Impact Testing at 23°C and -20°C

For practical testing of the impact resistance, the pipes were subjected to external blows by the staircase method according to EN 1411.. In this test, a series of the polyolefin single layer were conditioned at +23°C and multilayer pipes were conditioned at -20°C and subjected to a hammer falling from different heights. As a result, $H_{50}$[=mm] indicates the height, at which 50% of the pipes fail.

Conditioning Temperature: 23°C; Conditioning Period: 60 min; Conditioning: in air; Striker: d25; Weight: 800g;

Conditioning Temperature: -20°C; Conditioning Period: 60 min; Conditioning: in air; Striker: d25; Weight: 4000g;

Example 1

The following peroxide was used in the examples:
POX: peroxide masterbatch commercially available from AkzoNobel, containing 5 wt% of 2,5-Dimethyl-2,5-di(tert-butylperoxy)hexane (Trigonox 101, CAS 7863-7) and the carrier material is Polypropylene Random copolymer. Parameters of Trigonox 101: Mw=290 processing temp: 175°C Typical crosslink temp: 175°C.
The following filler was used in the examples:
Calcium carbonate: Calcitec M/5 available from Mineralia Sacilese.
The following polyethylenes were used in the examples:

PE 1: Post consumer Recyclate "Recythen HDPE" commercially available from Interseroh Dienstleistungs GmbH, containing Mixture of different PE-Types but mostly HDPE, having a density of 959 kg/m$^3$ determined according to ISO 1183 and a Melt Flow Rate (190 °C/2.16 kg) of 0.4 g/10min determined according to ISO 1133.

PE 2: Recycled high density polyethylene in the form of pellets, commercially available from KRUSCHITZ GMBH with a Melt Flow Rate (190 °C/2.16 kg) of 7.5 g/10min determined according to ISO 1133, and density of 950 kg/m$^3$ determined according to ISO 1183.

PE3: As a reference being typical pipe material, a virgin HDPE HE3490-IM, commercially available from Borealis AG was used as comparative example 3. The Melt Flow Rate (190 °C/2.16 kg) of PE3 is 0.12 g/10min determined according to ISO 1133, and density is 959 kg/m<3>determined according to ISO 1183.

A Coperion ZSK40 co-rotating twin screw extruder having L/D of 43 was used to produce the calcium carbonate filled polymer at a throughput rate from, 60 to 100 kg/h. The barrel temperatures were from 185 to 220°C. The screw speed was 300 rpm, the Melt temperature from 193°C to 206°C, the melt pressure from 37 to 48 bar and torque of the extruder from 61 to 79%

Pipe Extrusion

Pipe extrusion was performed on a Krauss Maffei 45 single screw extruder with L/D ratio of 36. It has 5 cylinder zones, 6 tool zones and 2 vacuumed water bath tanks. The POX masterbatch was fed into the hopper of the extruder together with recycling polyethylene.
Extrusion conditions were as follows: melt temperature Tm: 195-240 °C, screw speed 40-60 rpm, output 30-50 kg/h. The temperature in the cylinder zone 1 -5 varied from 200 to 225 °C. The sprayed water temperature in the water batch tanks was kept at 20 °C. The single layer pipe extruded has an outer diameter of 32 mm and a thickness of 3 mm.

Multilayer Pipe

Multilayer pipe extrusion was performed on a Krauss Maffei 75-36 single screw extruder with L/D ratio of 36. It has 5 cylinder zones, 6 tool zones and 2 vacuumed water bath tanks. The POX masterbatch was fed into the hopper of the extruder together with recycling polyethylene for the extrusion of middle layer of the pipe.
Extrusion conditions were as follows: melt temperature Tm: 190-240 °C, screw speed 40-60 rpm, output 200 kg/h. The temperature in the cylinder zone 1 -5 varied from 200 to 225 °C. The sprayed water temperature in the water batch tanks was kept at 20 °C.

The outer layer was extruded with an Extron Engineering OY EK50-30 Single screw extruder with L/D ratio of 30. It has 4 cylinder zones and 3 tool zones.

Extrusion conditions were as follows: melt temperature Tm: 195-240 °C, screw speed 80-90 rpm. The temperature in the cylinder zone 1-4 varied from 200 to 225 °C.

The inner layer was extruded with a Battenfeld BEX1-35-30 Single screw extruder with L/D ratio of 30. It has 4 cylinder zones and 3 tool zones.

Extrusion conditions were as follows: melt temperature Tm: 195-240 °C, screw speed 170-180 rpm. The temperature in the cylinder zone 1-4 varied from 200 to 225 °C.

Multilayer head from Battenfeld WPO 125-3.

Material used as inner and outer layer of the multilayer pipe is Polyethylene with a Melt Flow Rate (190/2.16) 0.4g/10min and density is 958 kg/m$^3$ determined according to ISO 1183.

The multilayer pipe extruded has a diameter of 110 mm, an overall thickness of 5 mm with an inner layer of 1 mm and an outer layer of 1 mm.

The recipe and pipe testing results are summarised in Tables 1 and 2. For the comparative examples CE1 and CE2, under the same pipe extrusion condition, pipe processing is not possible due to the high melt flow rate of the unmodified recycling polyethylene, therefore no pipe test result can be obtained. However, the inventive examples IE1 to IE4 which comprising modified polyethylene show surprisingly good pipe properties.

For the inventive samples IE5, IE6 and IE7 with calcium carbonate incorporated, the pipe extrusion was stable, also with good dimension stability and pipe surface appearance and with sufficiently good performance for many applications, particularly when the there is a need for a pipe material with increased stiffness.

These results should be compared with CE4, CE5 and CE6, for which it was not possible to produce pipes with sufficiently stable dimensions and appearance to enable relevant testing on the ready-made extruded samples.

Table 1

| Test | | CE1 | IE1 | CE2 | IE2 | IE3 | IE4 | CE3 (ref) |
|---|---|---|---|---|---|---|---|---|
| PE | | PE1 | PE1 | PE2 | PE2 | PE2 | PE2 | PE3 |
| POX amount | ppm | 0 | 250 | 0 | 1500 | 2000 | 2750 | 0 |
| $MFR_0$ 190/5 | g/10' | 2.2 | 2.2 | 22.2 | 22.2 | 22.2 | 22.2 | 0.5 |
| $MFR_0$ 190/21,6 | g/10' | 44,9 | 44,9 | 222 | 222 | 222 | 222 | 13,5 |
| $MFR_f$ 190/5 | g/10' | - | 0.87 | - | 1.35 | 0.62 | 0.36 | - |
| $MFR_f$ 190/21,6 | g/10' | -- | 27.4 | -- | 40.0 | 26.9 | 10.4 | -- |
| $MFR_0/MFR_f$ | FRR | --- | 2.5 | --- | 16.4 | 35.8 | 61.7 | --- |
| $FRR_f$ 21/5 | FRR | | 31.5 | | 29.6 | 43.4 | 28.9 | |
| XHU | % | 0 | 0.8 | 0 | 0.5 | 0.75 | 0.4 | 0 |
| μ | | -- | 0.0037 | -- | 0.0018 | 0.0018 | 0.0015 | |
| Output | Kg/h | 50 | 50 | 50 | 50 | 50 | 50 | 51 |
| Melt pressure | bar (kPa) | 90 (9000) | 116 (11600) | 29 (2900) | 90 (9000) | 112 (11200) | 117 (11700) | 165 (16500) |
| Torque | % | 46 | 48 | 37 | 34 | 35 | 43 | 59 |
| single layer pipe test | | | | | | | | |
| 3,2MPa/80°C | Hours | | 6.2 | -- | 8.0 | 7.0 | n/d | >1000 |
| falling weight 800g/23°C | mm | | 1250 | -- | 1300 | 600 | n/d | n/d |
| multilayer pipe test | | | | | | | | |
| 3,2MPa/80°C | hours | | 17.6 | -- | n/d | n/d | 10 | n/d |
| falling weight 4kg/-20°C | mm | -- | >5000 | -- | n/d | n/d | 1700 | n/d |

# EP 3 475 361 B1

Table 2

| Test | | CE4 | IE5 | CE5 | IE6 | CE6 | IE7 |
|---|---|---|---|---|---|---|---|
| PE | | PE2 | PE2 | PE2 | PE2 | PE1 | PE1 |
| Calcium carbonate | Wt% | 40 | 40 | 25 | 25 | 40 | 40 |
| POX amount | ppm | 0 | 1500 | 0 | 1500 | 0 | 250 |
| $MFR_0$ 190/5 | g/10' | 16,3 | 16,3 | 20'3 | 20,3 | 1,0 | 1,0 |
| $MFR_0$ 190/21,6 | g/10' | 118 | 118 | 157 | 157 | 22,8 | 22,8 |
| $MFR_f$ 190/5 | g/10' | -- | 0,23 | -- | 0,7 | -- | 0,3 |
| $MFR_f$ 190/21,6 | g/10' | -- | 12,6 | -- | 25,3 | -- | 12,8 |
| $MFR_0/MFR_f$ | FRR | -- | 70,8 | -- | 29,0 | -- | 3,3 |
| $FRR_f$ 21/5 | FRR | | 54,8 | | 36,1 | | 42,7 |
| XHU | % | 0 | 1,8 | 0 | 1,1 | 0 | 1,3 |
| $\mu$ | | -- | 0.002 | -- | 0.003 | -- | 0.005 |
| Output | Kg/h | 50 | 50 | 50 | 50 | 50 | 50 |
| Melt pressure | Bar (kPa) | 28 (2800) | 123 (12300) | 23 (2300) | 98 (9800) | 123 (12300) | 144 (14400) |
| Torque | % | 34 | 43 | 32 | 38 | 51 | 54 |
| 3,2MPa/80°C | Hours | -- | 0,2 | -- | 3 | -- | 4 |

**Claims**

1.  A process for producing a pipe comprising the steps of:

    (a) providing a recycled polyethylene having a melt flow rate (5kg, 190°C) ($MFR_0$) in the range of 0.5 to 100 g/10 min,
    (b) extruding the recycled polyethylene in the presence of a free radical generator so as to form a modified polyethylene, wherein the amount of the free radical generator is in a range of 200 ppm to 4000 ppm, based on the amount of recycled polyethylene, and wherein the modified polyethylene has a melt flow rate (5kg, 190°C) ($MFR_f$) in the range of 0.2 to 3.0 g/10 min and which is less than the melt flow rate of the recycled polyethylene, and wherein the melt flow rate of the recycled polyethylene, the melt flow rate of the modified polyethylene and the amount of the free radical generator meet the exponential decay (equation (I)) in respect of the starting melt flow rate (5kg, 190°C) ($MFR_0$) and the concentration (X) of the free radical generator based on the amount of recycled polyethylene,

    $$MFRf = MFR0 \times e^{-\mu X} \quad (I)$$

    wherein the exponential decay constant $\mu$ in the exponential decay (equation (I)) is greater than zero, and
    (c) forming said modified polyethylene into a pipe or layer of a pipe consisting of said modified polyethylene and optionally a filler and/or other additive(s).

2.  A process for producing a pipe according to claim 1, **characterized in that** the melt pressure in the step (b) is at least 7 MPa (70 bars), preferably at least 7.5 MPa (75 bars), more preferably at least 8 MPa (80 bars).

3.  A process for producing a pipe according to claim 1 or 2, **characterized in that** the recycled polyethylene is heated in the presence of the free radical generator to a temperature in the range of from 170 to 250°C, preferably from 180 to 240°C, most preferably from 180 to 230°C.

4.  A process for producing a pipe according to any one of claims 1 to 3, **characterized in that** the extrusion is carried out at a specific energy input (SEI) of below 0.4 kWh/kg, suitably from 0.15 to 0.4 kWh/kg, preferably from 0.15 to 0.35 kWh/kg, and more preferably from 0.15 to 0.25 kWh/kg.

5. A process for producing a pipe according to any one of claims 1 to 4, **characterized in that** the extrusion is carried out in a twin screw extruder or continuous intensive mixer, preferably a co-rotating twin screw extruder.

6. A process for producing a pipe according to any one of claims 1 to 5, **characterized in that** the extrusion is carried out in an extruder having a length over diameter ratio, L/D, of from 4:1 to 65:1, preferably from 5:1 to 60:1, more preferably from 6:1 to 50:1.

7. A process for producing a pipe according to any one of claims 1 to 6, **characterized in that** the extrusion is carried out in an extruder comprising a feed zone, melting zone and mixing zone, optionally one or more evacuation ports, wherein the free radical generator is fed into the extruder in the feed zone or mixing zone, preferably in the feed zone, and preferably the free radical generator is added as a premix or masterbatch.

8. The process according to any one of the preceding claims, **characterized in that** the free radical generator is selected from organic peroxides, preferably from the group consisting of acyl peroxides, alkyl peroxides, hydroperoxides, peresters, peroxycarbonates and mixtures thereof.

9. The process according to any one of the preceding claims, **characterized in that** the exponential decay constant $\mu$ in the exponential decay (equation (1)) is in the range of from 0.0005 to 0.005, preferably from 0.001 to 0.005.

10. The process according to any one of the preceding claims, **characterized in that** the pipe comprises a filler.

11. The process of claim 10, wherein the filler is an inorganic filler, an organic filler or a mixture thereof.

12. The process of claim 11, wherein the filler is an inorganic filler.

13. The process according to any one of the preceding claims, **characterized in that** the pipe comprises a filler with the amount of 1 to 70 wt% based on the total weight of the pipe, preferably from 10 to 50 wt%, more preferably 12 to 40 wt%.

14. The process according to any of claims 10 to 14, wherein the filler is calcium carbonate.

15. A pipe obtained by a process as claimed in any of claims 1 to 14.


**Patentansprüche**

1. Verfahren zur Herstellung eines Rohres, das die Schritte umfasst des:

(a) Bereitstellens eines recycelten Polyethylens, das einen Schmelzflussindex (5 kg, 190 °C) ($MFR_0$) im Bereich von 0,5 bis 100 g/10 min aufweist,
(b) Extrudierens des recycelten Polyethylens in Gegenwart eines Radikalbildners, um ein modifiziertes Polyethylen zu bilden, wobei die Menge des Radikalbildners, auf die Menge von recyceltem Polyethylen bezogen, in einem Bereich von 200 ppm bis 4.000 ppm liegt, und wobei das modifizierte Polyethylen einen Schmelzflussindex (5 kg, 190 °C) ($MFR_f$) im Bereich von 0,2 bis 3,0 g/10 min aufweist, der geringer ist als der Schmelzflussindex des recycelten Polyethylens, und wobei der Schmelzflussindex des recycelten Polyethylens, der Schmelzflussindex des modifizierten Polyethylens und die Menge des Radikalbildners in Bezug auf den Ausgangs-Schmelzflussindex (5 kg, 190 °C) ($MFR_0$) und die Konzentration (X) des Radikalbildners, auf die Menge von recyceltem Polyethylen bezogen, den exponentiellen Zerfall (Gleichung (I)) erfüllen,

$$MFRf = MFR0 \times e^{-\mu X} \quad (I)$$

wobei die Konstante des exponentiellen Zerfalls $\mu$ im exponentiellen Zerfall (Gleichung (I)) größer als Null ist, und
(c) Formens des modifizierten Polyethylens zu einem Rohr oder einer Schicht eines Rohres, die aus dem modifizierten Polyethylen und wahlweise einem Füllstoff und/oder anderem/n Zusatzstoff(en) besteht.

**2.** Verfahren zur Herstellung eines Rohres nach Anspruch 1, **dadurch gekennzeichnet, dass** der Schmelzedruck in Schritt (b) mindestens 7 MPa (70 Bar), bevorzugt mindestens 7,5 MPa (75 Bar), bevorzugter mindestens 8 MPa (80 Bar) beträgt.

**3.** Verfahren zur Herstellung eines Rohres nach Anspruch 1 oder 2, **dadurch gekennzeichnet, dass** das recycelte Polyethylen in Gegenwart des Radikalbildners auf eine Temperatur im Bereich von 170 bis 250 °C, bevorzugt von 180 bis 240 °C, am besonders bevorzugt von 180 bis 230 °C erhitzt wird.

**4.** Verfahren zur Herstellung eines Rohres nach einem der Ansprüche 1 bis 3, **dadurch gekennzeichnet, dass** die Extrusion unter einem spezifischen Energieeintrag (SEI) von unter 0,4 kWh/kg, geeigneterweise von 0,15 bis 0,4 kWh/kg, bevorzugt von 0,15 bis 0,35 kWh/kg, und bevorzugter von 0,15 bis 0,25 kWh/kg ausgeführt wird.

**5.** Verfahren zur Herstellung eines Rohres nach einem der Ansprüche 1 bis 4, **dadurch gekennzeichnet, dass** die Extrusion in einem Doppelschneckenextruder oder kontinuierlichen Intensivmischer, bevorzugt einem gleichläufigen Doppelschneckenextruder ausgeführt wird.

**6.** Verfahren zur Herstellung eines Rohres nach einem der Ansprüche 1 bis 5, **dadurch gekennzeichnet, dass** die Extrusion in einem Extruder ausgeführt wird, der ein Verhältnis von Länge zu Durchmesser, L/D, von 4:1 bis 65:1, bevorzugt von 5:1 bis 60:1, bevorzugter von 6:1 bis 50:1 aufweist.

**7.** Verfahren zur Herstellung eines Rohres nach einem der Ansprüche 1 bis 6, **dadurch gekennzeichnet, dass** die Extrusion in einem Extruder ausgeführt wird, der eine Eintragszone, Schmelzzone und Mischzone, wahlweise eine oder mehrere Austragsöffnungen umfasst, wobei der Radikalbildner in der Eintragszone oder Mischzone, bevorzugt in der Eintragszone, in den Extruder eingetragen wird, und der Radikalbildner bevorzugt als eine Vormischung oder Grundmischung zugegeben wird.

**8.** Verfahren nach einem der vorstehenden Ansprüche, **dadurch gekennzeichnet, dass** der Radikalbildner ausgewählt ist aus organischen Peroxiden, bevorzugt aus der Gruppe bestehend aus Acylperoxiden, Alkylperoxiden, Hydroperoxiden, Perestern, Peroxycarbonaten und Mischungen davon.

**9.** Verfahren nach einem der vorstehenden Ansprüche, **dadurch gekennzeichnet, dass** die Konstante des exponentiellen Zerfalls μ im exponentiellen Zerfall (Gleichung (1)) im Bereich von 0,0005 bis 0,005, bevorzugt von 0,001 bis 0,005 liegt.

**10.** Verfahren nach einem der vorstehenden Ansprüche, **dadurch gekennzeichnet, dass** das Rohr einen Füllstoff umfasst.

**11.** Verfahren nach Anspruch 10, wobei es sich bei dem Füllstoff um einen anorganischen Füllstoff, einen organischen Füllstoff oder eine Mischung davon handelt.

**12.** Verfahren nach Anspruch 11, wobei es sich bei dem Füllstoff um einen anorganischen Füllstoff handelt.

**13.** Verfahren nach einem der vorstehenden Ansprüche, **dadurch gekennzeichnet, dass** das Rohr, auf das Gesamtgewicht des Rohres bezogen, einen Füllstoff in der Menge von 1 bis 70 Gew.-%, bevorzugt von 10 bis 50 Gew.-%, bevorzugter 12 bis 40 Gew.-% umfasst.

**14.** Verfahren nach einem der Ansprüche 10 bis 14, wobei es sich bei dem Füllstoff um Calciumcarbonat handelt.

**15.** Rohr, das über ein Verfahren nach einem der Ansprüche 1 bis 14 erhalten wird.

**Revendications**

**1.** Procédé de production d'un tuyau comprenant les étapes consistant à :

(a) fournir un polyéthylène recyclé présentant un indice de fluidité à chaud (5 kg, 190 °C) ($MFR_0$) dans la plage de 0,5 à 100 g/10 min,
(b) extruder le polyéthylène recyclé en présence d'un générateur de radicaux libres de manière à former un polyéthylène modifié, dans lequel la quantité du générateur de radicaux libres est dans une plage de 200 ppm à 4000 ppm, sur la base de la quantité de polyéthylène recyclé, et dans lequel le polyéthylène modifié présente un indice de fluidité à chaud (5 kg, 190 °C) (MFR$_f$) dans la plage de 0,2 à 3,0 g/10 min et qui est inférieur à l'indice de fluidité à chaud du polyéthylène recyclé, et dans lequel l'indice de fluidité à chaud du polyéthylène recyclé, l'indice de fluidité à chaud du polyéthylène modifié et la quantité du générateur de radicaux libres satisfont à la décroissance exponentielle (équation (I)) en ce qui concerne l'indice de fluidité à chaud de départ (5 kg, 190 °C) (MFR$_0$) et la concentration (X) du générateur de radicaux libres sur la base de la quantité de polyéthylène recyclé,

$$MFRf = MFR0 \times e^{-\mu X} \qquad \text{(I)}$$

dans laquelle la constante $\mu$ de décroissance exponentielle dans la décroissance exponentielle (équation (I)) est supérieure à zéro, et

(c) former ledit polyéthylène modifié en un tuyau ou une couche d'un tuyau consistant en ledit polyéthylène modifié et facultativement une charge et/ou un ou plusieurs autre(s) additif(s).

2. Procédé de production d'un tuyau selon la revendication 1, **caractérisé en ce que** la pression de la matière fondue à l'étape (b) est d'au moins 7 MPa (70 bar), de préférence d'au moins 7,5 MPa (75 bar), plus préférentiellement d'au moins 8 MPa (80 bar).

3. Procédé de production d'un tuyau selon la revendication 1 ou 2, **caractérisé en ce que** le polyéthylène recyclé est chauffé en présence du générateur de radicaux libres à une température dans la plage de 170 à 250 °C, de préférence de 180 à 240 °C, plus préférentiellement de 180 à 230 °C.

4. Procédé de production d'un tuyau selon l'une quelconque des revendications 1 à 3, **caractérisé en ce que** l'extrusion est mise en œuvre à une entrée d'énergie spécifique (SEI) inférieure à 0,4 kWh/kg, de manière appropriée de 0,15 à 0,4 kWh/kg, de préférence de 0,15 à 0,35 kWh/kg, et plus préférentiellement de 0,15 à 0,25 kWh/kg.

5. Procédé de production d'un tuyau selon l'une quelconque des revendications 1 à 4, **caractérisé en ce que** l'extrusion est mise en œuvre dans une extrudeuse à double vis ou un mélangeur intensif continu, de préférence une extrudeuse à double vis à corotation.

6. Procédé de production d'un tuyau selon l'une quelconque des revendications 1 à 5, **caractérisé en ce que** l'extrusion est mise en œuvre dans une extrudeuse présentant un rapport longueur sur diamètre, L/D, de 4:1 à 65:1, de préférence de 5:1 à 60:1, plus préférentiellement de 6:1 à 50:1.

7. Procédé de production d'un tuyau selon l'une quelconque des revendications 1 à 6, **caractérisé en ce que** l'extrusion est mise en œuvre dans une extrudeuse comprenant une zone d'alimentation, une zone de fusion et une zone de mélange, facultativement un ou plusieurs orifices d'évacuation, dans lequel le générateur de radicaux libres est introduit dans l'extrudeuse dans la zone d'alimentation ou la zone de mélange, de préférence dans la zone d'alimentation, et de préférence le générateur de radicaux libres est ajouté sous forme d'un prémélange ou d'un mélange maître.

8. Procédé selon l'une quelconque des revendications précédentes, **caractérisé en ce que** le générateur de radicaux libres est sélectionné parmi les peroxydes organiques, de préférence dans le groupe consistant en les peroxydes d'acyle, les peroxydes d'alkyle, les hydroperoxydes, les peresters, les peroxycarbonates et les mélanges de ceux-ci.

9. Procédé selon l'une quelconque des revendications précédentes, **caractérisé en ce que** la constante $\mu$ de décroissance exponentielle dans la décroissance exponentielle (équation (1)) est dans la plage de 0,0005 à 0,005, de préférence de 0,001 à 0,005.

10. Procédé selon l'une quelconque des revendications précédentes, **caractérisé en ce que** le tuyau comprend une charge.

11. Procédé selon la revendication 10, dans lequel la charge est une charge inorganique, une charge organique ou un mélange de celles-ci.

**12.** Procédé selon la revendication 11, dans lequel la charge est une charge inorganique.

**13.** Procédé selon l'une quelconque des revendications précédentes, **caractérisé en ce que** le tuyau comprend une charge en une quantité de 1 à 70 % en poids sur la base du poids total du tuyau, de préférence de 10 à 50 % en poids, plus préférentiellement de 12 à 40 % en poids.

**14.** Procédé selon l'une quelconque des revendications 10 à 14, dans lequel la charge est le carbonate de calcium.

**15.** Tuyau obtenu par un procédé selon l'une quelconque des revendications 1 à 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2770016 A
- WO 2013101767 A
- EP 2966123 A1
- EP 0404552 A
- EP 0318841 A
- EP 13004878

**Non-patent literature cited in the description**

- **CHRIS RAUWENDAAL.** Polymer Extrusion. Carl Hanser Verlag, 1986
- *CHEMICAL ABSTRACTS,* 7863-7